# EUROPÄISCHE PATENTANMELDUNG

(11) **EP 4 471 274 A1**
(43) Veröffentlichungstag der Anmeldung: **04.12.2024**
(21) Anmeldenummer: 24170726.4
(22) Anmeldetag: 17.04.2024
(51) Int. Cl.: F04D 13/06, F04D 29/42, F04D 29/62, B60K 11/02, F01P 5/10, F04D 13/14, F04D 13/16

(54) **ANORDNUNG UMFASSEND EINE PUMPE FÜR EINEN KÜHLKREISLAUF EINES KRAFTFAHRZEUGS**

(30) Priorität: 01.06.2023 DE 102023114427
(71) Anmelder: HELLA GmbH & Co. KGaA, 59552 Lippstadt (DE)
(72) Erfinder: BEWERMEYER, Frank, 33104 Paderborn (DE); GROTHE, Benjamin, 58739 Wickede (DE); HILLE, Christof, 57368 Lennestadt (DE); KÖSTER, Christian, 59581 Warstein (DE); MALLON, Matthias, 59065 Hamm (DE); NIESS, Dominik, 59379 Selm (DE); STORK, Sebastian, 33142 Büren (DE); TIEMEYER, Sebastian, 44143 Dortmund (DE); KLAMKE, Markus, 59556 Lippstadt (DE)
(74) Vertreter: Wichmann, Jörg

(57) **Zusammenfassung**

Die Erfindung betrifft eine Anordnung für wenigstens einen Kühlkreislauf eines Kraftfahrzeugs, wobei die Anordnung eine Pumpe aufweist, wobei die Pumpe ein Gehäuse (10, 20, 30, 40), einen Motor mit einem Stator (50) und einem Rotor (60), die in dem Gehäuse (10, 20, 30, 40) der Pumpe angeordnet sind, und eine in dem Gehäuse (10, 20, 30, 40) vorgesehene Pumpenkammer (P) aufweist, in welcher ein Laufrad (90) der Pumpe drehbar und von dem Motor antreibbar angeordnet ist, welches das von der Pumpe zu fördernde Medium fördert, wobei die Anordnung einen Tank und/oder ein Verteilerbauteil (V) aufweist, und wobei zumindest ein erster Teil (10) des Gehäuses (10, 20, 30, 40) in einem Teil des Tanks oder des Verteilerbauteils (V) der Anordnung ausgebildet ist.

## Beschreibung

Die Erfindung betrifft eine Anordnung für wenigstens einen Kühlkreislauf eines Kraftfahrzeugs, wobei die Anordnung eine Pumpe aufweist.

Aus dem Stand der Technik, zum Beispiel den Dokumenten DE 10 2021 106 969 A1, WO 2022/253381 A1, DE 10 2021 106 969 A1, WO 2017/223232 A2 und vielen anderen Dokumenten sind Anordnungen bekannt, die ein Verteilerbauteil aufweisen. Meist ist das ein komplexes Kunststoff-Spritzguss-Bauteil, an welchem Pumpen, Leitungen, Ventile, Tanks und gegebenenfalls weitere Komponenten eines Kühlkreislaufes angeschlossen werden können. In dem Verteilerbauteil sind Kanäle oder Leitungen ausgebildet, welche die an die Anschlüsse angeschlossenen Pumpen und Leitungen verbinden können. Welche Anschlüsse miteinander verbunden sind, kann durch die Ventile gesteuert werden. Die Anordnungen umfassen in der Regel neben den Verteilerbauteilen die Pumpen und Ventile und oft auch die Tanks.

Aus dem Stand der Technik sind auch Varianten von solchen Anordnungen bekannt, bei denen eine Pumpe nicht an dem Verteilerbauteil, sondern an einem Tank befestigt ist.

Die Reduzierung von Bauvolumen ist eine ständige Aufgabe für Entwickler und Konstrukteure von Kraftfahrzeugen und Kraftfahrzeugteilen. Ebenso ist es eine ständige Aufgabe die Anzahl benötigter Teile zu reduzieren. Auch die Entwickler und Konstrukteure der genannten Anordnungen für Kühlkreisläufe in Kraftfahrzeugen stehen vor diesen Aufgaben.

Der vorliegenden Erfindung liegen die Aufgaben zu Grunde, Bauraum und die Anzahl von Teilen eines Kühlkreislaufs zu reduzieren.

Diese Aufgabe wird erfindungsgemäß dadurch gelöst, dass die Anordnung einen Tank und/oder ein Verteilerbauteil aufweist, und dass zumindest ein erster Teil des Gehäuses einer Pumpe in einem Teil des Tanks oder des Verteilerbauteils der Anordnung ausgebildet ist.

Der Tank oder das Verteilerbauteil bilden erfindungsgemäß somit einen Teil des Pumpengehäuses und insoweit auch einen Teil der Pumpe. Dadurch kann ein weiteres Teil, welches bisher diesen Teil des Pumpengehäuses bildet, entfallen. Statt bisher eine vollständige Pumpe mit dem Verteilerbauteil oder dem Tank zu verbinden, ist erfindungsgemäß eine Pumpe mit einem unvollständigen Gehäuse an dem Verteilerbauteil oder dem Tank befestigt, wodurch dann die vollständige Pumpe gebildet ist.

Eine erfindungsgemäße Anordnung kann mehrere Pumpen aufweisen. Es ist möglich, dass bei einer Pumpe der erste Teil des Gehäuses durch das Verteilerbauteil gebildet ist und bei einer weiteren Pumpe der erste Teil des Pumpengehäuses durch den Tank gebildet ist. Es ist aber auch möglich, dass bei allen Pumpen der erste Teil des Gehäuses durch das Verteilerbauteil oder den Tank gebildet ist. Sind beispielsweise in einer erfindungsgemäßen Anordnung drei Pumpen vorgesehen, können drei Teile, die herkömmlich zur Bildung einer vollständigen Pumpe notwendig sind, entfallen, da sie durch in dem Verteilerbauteil oder dem Tank gebildete erste Teile des Gehäuses ersetzt sind.

Der erste Teil des Gehäuses kann einen Teil einer Begrenzung der Pumpenkammer bilden. Der erste Teil kann somit Strukturen aufweisen, die eine Wand oder Teile einer Wand der Pumpenkammer bilden, die in die Pumpenkammer hineinragen, die mit dem in der Pumpenkammer angeordneten Laufrad zusammenwirken usw.

Insbesondere kann der erste Teil Gehäuses eine Wand bilden, die die Pumpenkammer auch in radialer Richtung begrenzt. In dem ersten Teil des Gehäuses kann eine Ringnut vorgesehen sein, in welcher ein Kranz des Laufrades der Pumpe eingreift. Dadurch kann das Laufrad in dem Pumpengehäuse gelagert sein.

Durch das Ineinandergreifen des Kranzes des Laufrades und der Ringnut des ersten Teils des Gehäuses bzw. des Kranzes des ersten Teils des Gehäuses und der Ringnut des Laufrades wird eine Dichtung zwischen einem Einlass und der Pumpenkammer hergestellt. Die Dichtung kann eine Labyrinthdichtung sein oder einer Labyrinthdichtung ähnlich sein. Durch diese Dichtung wird ein ungewollter Flüssigkeitsstrom zwischen der Pumpenkammer und dem Einlass reduziert und der Wirkungsgrad der Pumpe erhöht.

Durch den Kranz des Laufrades, der nicht in den Einlass eingreift, sondern in eine Ringnut des ersten Teils des Gehäuses, die den Einlass umschließt, oder alternativ durch den den Einlass umschließenden Kranz des ersten Teils des Gehäuses, der in eine Ringnut des Laufrades eingreift, kann eine erfindungsgemäße Pumpe ein zweites Lager für die rotierenden Teile der Pumpe aufweisen, welches die Lagerung der rotierenden Teile der Pumpe unterstützt. Dieses zweite Lager führt zu einer größeren Laufruhe der rotierenden Teile und führt auch dadurch zu einer Verbesserung im akustischen Verhalten der Pumpe. Die von der Pumpe in deren Betrieb erzeugten Schallemissionen sind durch das zweite Lager geringer und/oder angenehmer.

Ebenso ist es möglich, dass in dem ersten Teil des Gehäuses Ausnehmungen vorgesehen sind, die in Richtung zu einem weiteren Teil des Pumpengehäuses geöffnet sind, und dass an dem weiteren Teil des Gehäuses Vorsprünge vorgesehen sind, die in die Ausnehmungen eingreifen.

Die Ausnehmungen sind vorzugsweise in einer Richtung parallel zur Drehachse des Laufrades ausgerichtet.

Wären die Vorsprünge und die Ausnehmungen nicht vorgesehen, lägen womöglich anstelle der Vorsprünge und der Ausnehmungen ebene Flächen des ersten Teils des Gehäuses und eines weiteren Teils des Gehäuses aneinander. Durch die Vorsprünge und Ausnehmungen entsteht dagegen eine Art Labyrinthdichtung, die schon ohne zusätzliches Dichtmittel für eine verbesserte Abdichtung zwischen dem Hochdruckbereich und dem Niederdruckbereich sorgt.

Die Ausnehmungen und Vorsprünge machen ferner möglich, dass das erste Teil des Gehäuses der Pumpe und das weitere Gehäuseteil, bei dem es sich zum Beispiel um das zweite Teil des Gehäuses handeln kann, nur in einer definierten Position zusammengesetzt werden können, um die Pumpenkammer zu bilden. Eine Fehlmontage der beiden Gehäuseteile aneinander kann dadurch verhindert werden.

Die Ausnehmungen und/oder Vorsprünge können in etwa die Form eines geraden Zylinders haben. Das schließt eine leichte Schrägstellung von Seitenwänden der Vorsprünge mit ein, die notwendig sein kann, wenn die Gehäuseteile zum Beispiel durch Spritzgießen geformt werden.

Die geraden Zylinder können eine Grundfläche haben, die dem Sektor eines Kreisringes ähnelt. Die inneren Wände der Ausnehmungen können beispielsweise der Spiralform der die Pumpenkammer radial begrenzenden Wand folgen.

Die Erfindung wird anhand der Zeichnung näher erläutert. Es zeigt
- Fig. 1: eine perspektivische Darstellung einer bekannten Pumpe (Fig. 1 aus DE 10 2019 115 774 A1),
- Fig. 2: einen Längsschnitt durch die bekannte Pumpe (Fig. 2 aus DE 10 2019 115 774 A1),
- Fig. 3: eine perspektivische Explosionsdarstellung einer anderen bekannten Pumpe ohne das erste Teil eines Gehäuses (Fig. 2 aus DE 10 2018 125 037 A1),
- Fig. 4: eine perspektivische Darstellung eines Verteilerbauteils einer erfindungsgemäßen Anordnung,
- Fig. 5: eine Draufsicht auf das Verteilerbauteil der erfindungsgemäßen Anordnung und
- Fig. 6: eine Darstellung eines Teils eines Längsschnittes durch eine Pumpe einer erfindungsgemäßen Anordnung.

Die erste Pumpe weist ein mehrteiliges Gehäuse auf, nämlich einen ersten Teil des Gehäuses 10, einen zweiten Teil des Gehäuses 20, einen dritten Teil des Gehäuses 30 und einen vierten Teil des Gehäuses 40, wobei in dem dritten Teil 30 ein Stator 50 eines Motors der Pumpe vorgesehen ist. Der Motor der Pumpe wird durch einen Rotor 60 vervollständigt, der an dem zweiten Teil des Gehäuses 20 drehbar gelagert ist und in den der Stator 50 eintaucht. Der Stator 50 wiederum taucht in den zweiten Teil des Gehäuses 20 ein. Ferner ist ein Schaltungsträger 70 vorgesehen, auf dem eine elektronische Schaltung 80 vorgesehen ist, über die der Motor mit elektrischer Energie versorgt wird und gesteuert wird. Eine Elektronikkammer E, in der der Schaltungsträger 70 und die Schaltung 80 angeordnet sind, wird von dem dritten Teil 30 und dem vierten Teil 40 des Gehäuses begrenzt.

Die Gehäuseteile 10, 20, 30, 40 können aus Kunststoff hergestellt sein, zum Beispiel aus Vyncolit. Der Stator 50 ist in dem dritten Teil 30, vorzugsweise in einer ersten Wand 301 eingegossen, die von einer Schürze des dritten Teils 30 gebildet ist.

Durch nicht dargestellte Schrauben sind der erste Teil des Gehäuses 10 und der zweite Teil 20 miteinander verbunden. Durch ebenfalls nicht dargestellte Schrauben sind der vierte Teil 40 und der dritte Teil 30 und der dritte Teil 30 und der zweite Teil 20 miteinander verbunden.

Um eine druckfestere Verbindung zwischen dem ersten Teil 10 und dem zweiten Teil 20 zu erzielen, weist ein Flansch 101 des ersten Teils 10 einen umlaufenden Steg 102 auf, der in eine Ringnut 203 des zweiten Teils 20 formschlüssig eingreift, die in einem ersten Flansch 201 des zweiten Teils 20 vorgesehen ist. Dadurch kann eine Aufdehnung des ersten Teils 10 und des zweiten Teils 20 im Betrieb der Pumpe aufgrund des dort herrschenden Druckes vermieden oder zumindest reduziert werden.

Der erste Teil 10 und eine Wand 204 des zweiten Teils 20, nämlich eine zweite Wand, die von einer Motorwelle 601 durchragt wird, schließen eine Pumpenkammer P ein, in der sich das Laufrad 90 befindet. Die Pumpenkammer P ist über einen Ansaugstutzen 103 des ersten Teils 10 mit einer Leitung verbindbar, über die die zu pumpende Flüssigkeit angesaugt wird. Der Ansaugstutzen 103 ist koaxial zu einer Rotationsachse des Rotors 60 angeordnet.

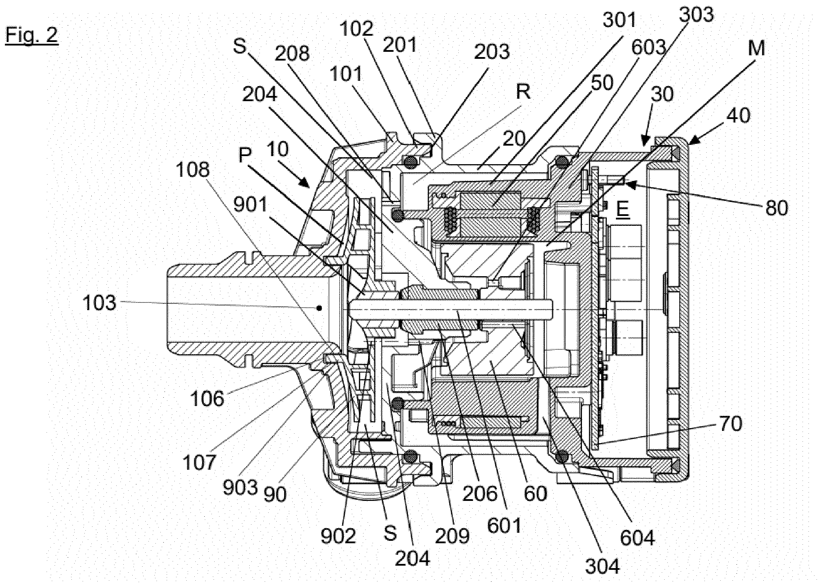

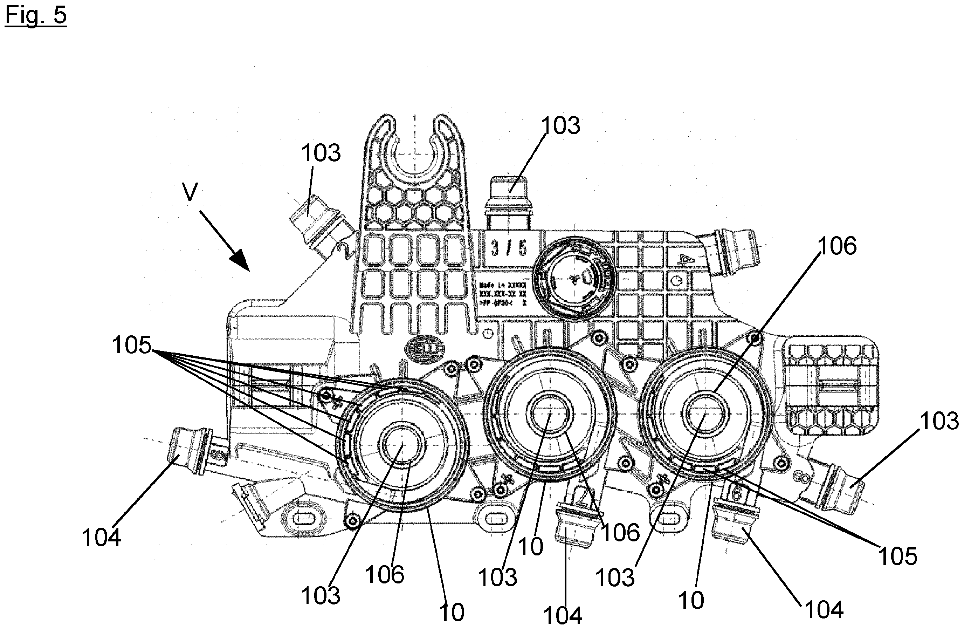

Die Pumpenkammer P ist über einen Auslassstutzen 104 mit einer Leitung verbindbar, in die die gepumpte Flüssigkeit gedrückt wird. Eine Außenwand des ersten Teils 10 und das Laufrad 90 begrenzen einen Spiralraum S, der sich zu dem Auslass der Pumpenkammer spiralartig erweitert. Das Laufrad 90 ist auf an sich bekannte Art ausgebildet, zum Beispiel auf eine in dem Dokument DE 10 2011 055 599 A1, Fig. 2, 3 oder 5 dargestellte Art, auf die zur näheren Erläuterung eines für eine erfindungsgemäße Pumpe in Frage kommenden Laufrades 90 verwiesen wird.

Die Pumpe weist ein Laufrad 90 auf, das in dem ersten Teil 10 drehbar angeordnet und dazu auf einer Welle 601 des Rotors 60 befestigt ist, die in den ersten Teil 10 hineinragt.

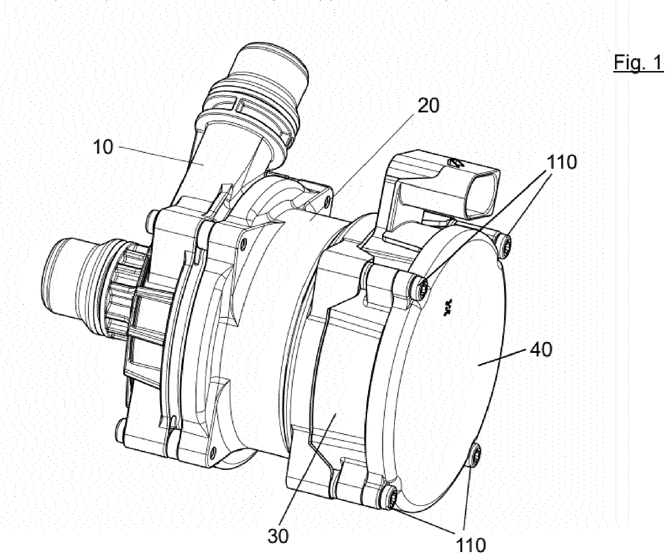

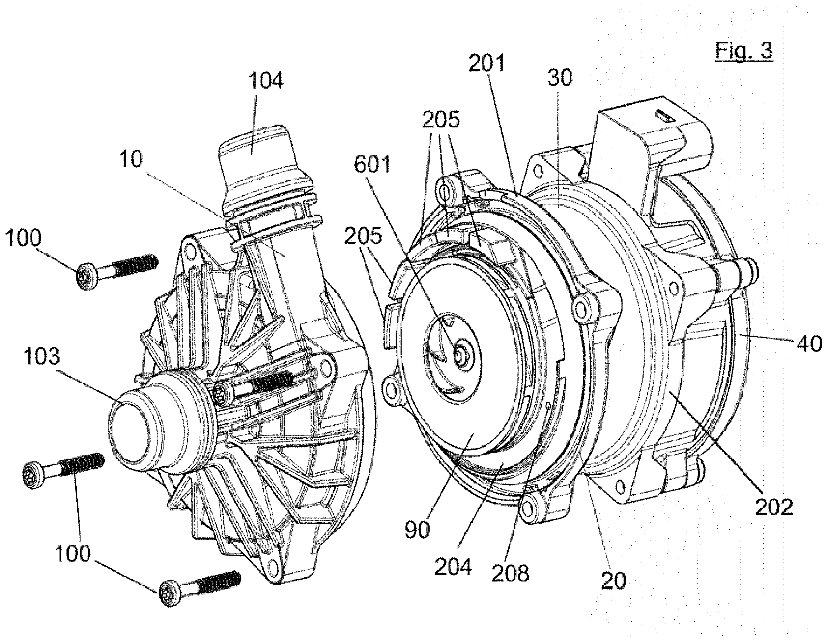

Das Laufrad 90 weist auf einer dem zweiten Teil 20 abgewandten Seite einen Kranz 903 auf. Der Kranz 903 greift in eine Ringnut 106 in dem ersten Teil 10 ein (Der Kranz und die Ringnut sind nur bei der bekannten Pumpe gemäß der Fig. 1 und 2 vorgesehen, nicht jedoch bei der Pumpe aus der Fig. 3.). Die Ringnut 106 und der Kranz 903 haben einen größeren Durchmesser als der freie Querschnitt des Einlassstutzens 103. Der Kranz 903 behindert einen Flüssigkeitsstrom aus dem Einlassstutzen 103 in die Pumpenkammer P daher nicht. Da der Kranz 903 in die Ringnut 106 eintaucht, kommt der Kranz 903 auch nicht mit der einströmenden Flüssigkeit in Kontakt. Eine Bewegung des Kranzes 903 hat daher keinen Einfluss auf die einströmende Flüssigkeit.

Der Kranz 903 des Laufrades 90 ist in der Ringnut 106 des ersten Teils 10 geführt.

Zwischen dem Kranz 903 und einer inneren Wand 108 der Ringnut 104 und zwischen dem Kranz 903 und einer äußeren Wand 107 der Ringnut 106 liegt ein innerer bzw. ein äußerer Ringspalt vor. Der in die Ringnut 106 eintauchende Kranz 903 verhindert einen Flüssigkeitsstrom an dem Laufrad 90 vorbei vom Ansaugstutzen 103 zum Auslass. Allenfalls ein kleiner Leckstrom ist über die Ringspalte möglich.

Das Laufrad 90 hat eine Buchse 901, vorzugsweise aus Metall, mit einem zentralen Durchgangsloch, in das die Rotorwelle 601 eingesteckt ist, so dass das Laufrad 90 mit der Buchse 901 drehfest, vorzugsweise im Presssitz, auf der Rotorwelle 601 sitzt. Parallel zu dem zentralen Durchgangsloch der Buchse 901 weist der Rotor Durchgangslöcher 902 auf, durch die eine Flüssigkeit von einer dem zweiten Teil 20 zugewandten Seite des Laufrades 90 auf eine dem Einlass zugewandten Seite des Laufrades 90 strömen kann.

In dem Maße, wie sich der Spiralraum S der Pumpenkammer P spiralartig erweitert, verjüngt sich die die Pumpenkammer P in radialer Richtung begrenzende Wand des ersten Teils 10. In dieser Wand sind Ausnehmungen 105 vorgesehen, die in Richtung des zweiten Teils 20 geöffnet sind. Bei den in den Figuren 1 bis 3 dargestellten Beispielen haben diese Ausnehmungen 105 in etwa die Form eines geraden Zylinders mit einer Grundfläche, die dem Sektor eines Kreisringes ähnelt. Die Grundfläche des Zylinders ist bei den dargestellten Beispielen deshalb einem Sektor eines Kreisringes ähnlich, wobei die inneren Wände der Ausnehmungen 105 der Spiralform der radialen Begrenzung der Pumpenkammer P bzw. des Spiralraums S der Pumpenkammer P folgen. Dadurch ergeben sich in der Umfangsrichtung verjüngende Ausnehmungen 105. Es ergibt sich dadurch ferner, dass die Ausnehmungen 105 sich unterscheiden.

Komplementär zu den Ausnehmungen 105 sind bei den Pumpen nach den Figuren 1 bis 3 an der dem zweiten Teil 20 zugewandten Wand 204, die von der Rotorwelle 601 durchragt wird, Vorsprünge 205 vorgesehen, die im zusammengebauten Zustand der Pumpe in die Ausnehmungen 105 hineinragen.

Durch die Ausnehmungen 105 und die komplementären Vorsprünge 205 können das erste Teil 10 und das zweite Teil 20 bei der Montage der Pumpen nur in einer eindeutigen Stellung zusammengesetzt werden.

Eine eindeutige Stellung des ersten Teils 10 und des zweiten Teils 20 könnte auch auf andere Art erreicht werden.

Die Ausnehmungen 105 und Vorsprünge 205 haben auch einen weiteren Effekt. Der Bereich des ersten Teils 10 und des zweiten Teils 20, in dem die Ausnehmungen 105 bzw. die Vorsprünge 205 vorgesehen sind, trennt den Hochdruckbereich und den Niederdruckbereich der Pumpenkammer P bzw. des Spiralraums S. Diese müssen möglichst gut gegeneinander abgedichtet sein, so dass ein Flüssigkeitsfluss am Flüssigkeitskreislauf über die an die Pumpe angeschlossenen Leitungen vorbei möglichst verhindert ist und die Pumpe möglichst effektiv arbeiten kann. Wären die Vorsprünge 205 und die Ausnehmungen 105 nicht vorgesehen, lägen anstelle dieser ebenen Flächen des ersten Teils 10 und des zweiten Teils 20 aneinander. Durch die Vorsprünge 205 und Ausnehmungen 105 entsteht dagegen eine Art Labyrinthdichtung, die schon ohne zusätzliches Dichtmittel für eine verbesserte Abdichtung zwischen dem Hochdruckbereich und dem Niederdruckbereich sorgt.

In der bereits erwähnten Wand 204, die von der Rotorwelle 601 durchragt wird, ist eine Buchse 206 vorgesehen, die als Lager der Rotorwelle 601 dient. Die Buchse 206 zur Lagerung der Rotorwelle ist in die bereits erwähnte Wand 204 eingesetzt und fest mit dem übrigen zweiten Teil 20 verbunden. Die Buchse 206 hat ein Durchgangsloch, dessen Querschnitt der Rotorwelle 601 angepasst ist. Axial können in der Wand des Durchgangslochs eine oder mehrere Nuten (nicht dargestellt) vorgesehen sein, durch die bei eingesetzter Rotorwelle 601 eine Flüssigkeit zwischen der Pumpenkammer P und einer vom zweiten Teil 20 und der Schürze 301 begrenzten Motorkammer M und umgekehrt fließen kann. Kleine Mengen der durch die Nuten 207 geführten Flüssigkeit werden bei Rotation des Rotors von der Welle 601 mitgenommen und sorgen für eine Schmierung zwischen der Rotorwelle 601 und der Buchse 206.

In der Wand 204, die von der Rotorwelle 601 durchragt wird, sind im Bereich des Spiralraums S ein oder mehrere Durchgangslöcher 208 vorgesehen, die eine Verbindung zwischen dem Spiralraum S und einem von dem Motorgehäuse 20, der Schürze 301 und einer Stirnwand 303 des Elektronikgehäuses 30 begrenzten Ringkammer R schafft bzw. schaffen. Eine Flüssigkeit kann durch die Durchgangslöcher 208 aus dem Spiralraum, der auf der Hochdruckseite des Laufrades 90 liegt, in die Ringkammer R gefördert werden.

Die Ringkammer R ist durch ein oder mehrere radiale Durchgangslöcher 304 in der Schürze 301 mit der Motorkammer M verbunden. Die Durchgangslöcher 304 sind in der Nachbarschaft zu der Stirnwand 303 vorgesehen. Eine Flüssigkeit, die aus der Ringkammer R in die Motorkammer M übertritt, kann durch die Motorkammer M, zum Beispiel durch einen Spalt zwischen dem Rotor 60 und der Schürze 301 zu der bezogen auf den Rotor 60 der Pumpenkammer P zugewandten Seite der Motorkammer M gefördert werden.

Bei der Pumpe sind in einem Bereich des Rotors 60 zwischen der Welle und dem Permanentmagneten erste Durchgangslöcher 603 und zweite Durchgangslöcher 604 vorgesehen. Die ersten Durchgangslöcher 603 erstrecken sich parallel zur Welle 601 in einem Bereich unmittelbar benachbart zur Welle 601. Die zweiten Durchgangslöcher 603 sind radial weiter von der Rotorwelle 601 entfernt und damit näher an einem Permanentmagneten, der im Rotor eingebettet ist. Beide Durchgangslöcher verbinden einen Raum der Motorkammer auf einer ersten Seite des Rotors und einen Raum der Motorkammer auf einer zweiten Seite des Rotors.

Durch die Durchgangslöcher 603, 604 im Rotor 60, die bereits erwähnten und optional vorgesehenen Nuten in der Lagerbuchse 206 der Rotorwelle 601, die Durchgangslöcher 209 in der Wand 204 und die Durchgangslöcher 902 im Laufrad 90 kann die Flüssigkeit auf die Einlassseite des Laufrades 90, also auf die Niederdruckseite des Laufrades 90 gefördert werden. Es besteht damit eine durchgehende Verbindung von dem Spiralraum S, also der Hochdruckseite der Pumpenkammer P, über die Durchgangslöcher 208 zwischen dem Spiralraum S und der Ringkammer R in die Ringkammer R, von dort aus über die Durchgangslöcher 304 zwischen der Ringkammer R und der Motorkammer M in die Motorkammer M und von der Motorkammer M über die Durchgangslöcher 603, 604 und ggf. über die Nuten 207 in der Lagerbuchse 206, die Durchgangslöcher 209 und die Durchgangslöcher 902 in der Buchse 901 des Laufrades 90 zur Einlassseite des Laufrades 90, der Niederdruckseite der Pumpenkammer P. Im Betrieb der Pumpe stellt sich entlang dieses Weges ein Flüssigkeitsstrom ein, der zwar deutlich kleiner ist als der von der Pumpe in den Auslass geförderte Strom, aber so groß ist, um bei einem Nennbetrieb eine ausreichende Kühlung der Pumpe zu erreichen.

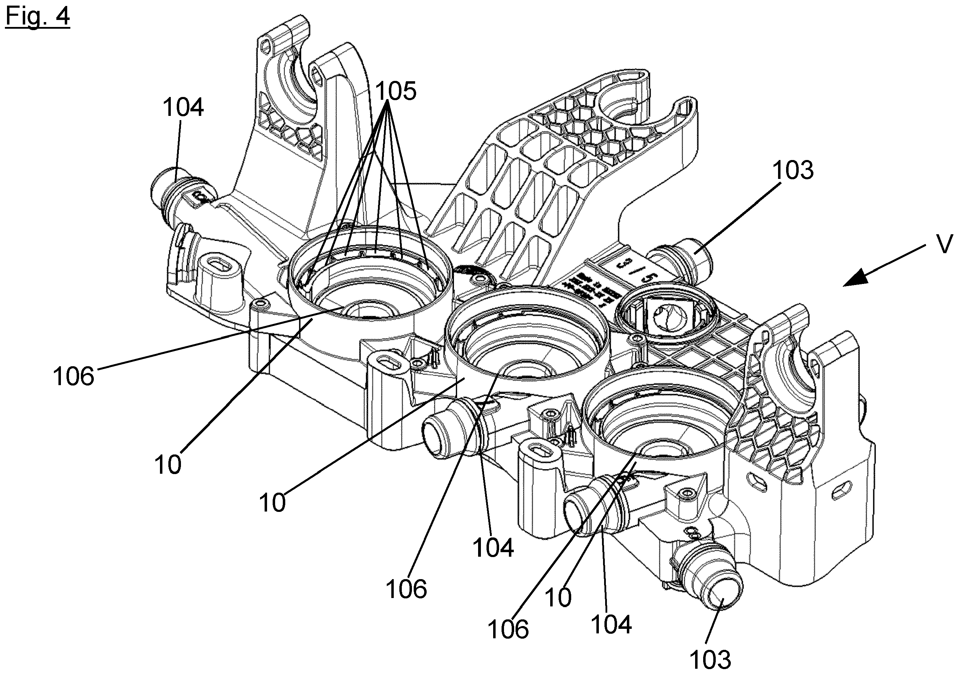

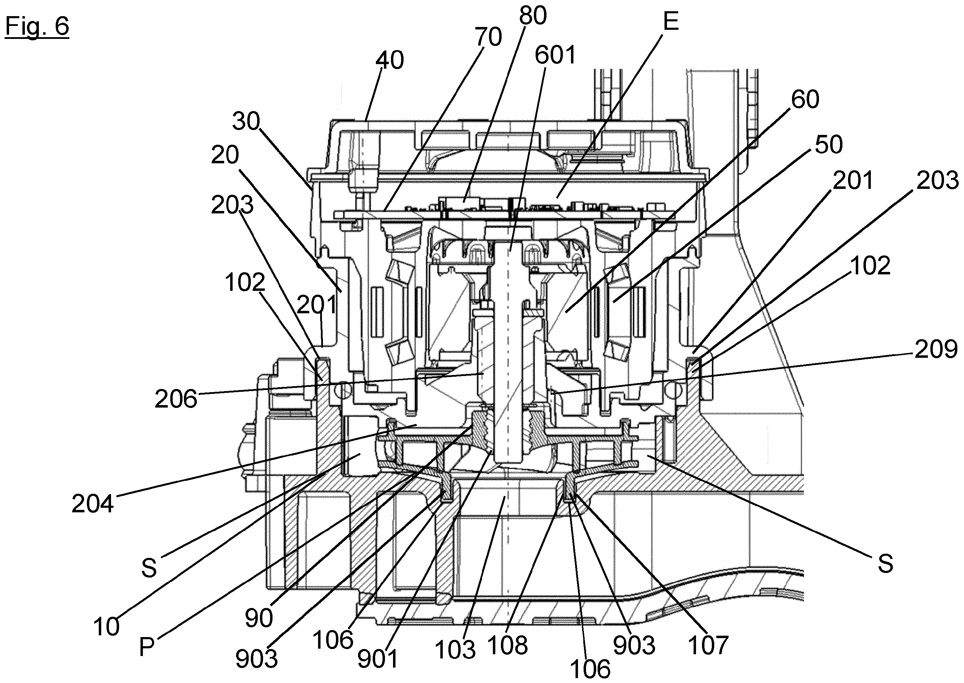

Das in den Figuren 4 ff. dargestellte Verteilerbauteil V einer erfindungsgemäßen Anordnung bildet drei erste Teile eines Gehäuses einer Pumpe, wie sie der Pumpe aus den Figuren 1 und 2 bekannt sind. Diese in dem Verteilerbauteil ausgebildeten ersten Teile weisen alle vorstehend beschriebenen Merkmale des ersten Teils der Pumpe nach den Figuren 1 und 2 auf. So sind in diesen ersten Teilen insbesondere die Ausnehmungen 105 und die Ringnut 106 ausgebildet, die mit den Vorsprüngen 205 des zweiten Teils 20 des Gehäuses bzw. mit dem Kranz 903 des Laufrades 90 zusammenwirken. Außerdem ist in den die ersten Teile 10 bildenden Bereichen des Verteilerbauteils V ein umlaufender Steg 102, ein Ansaugstutzen 103, ein Auslassstutzen 104 und eine äußere Wand 107 vorgesehen. Diese sind zumindest mit dem Laufrad 90 und dem zweiten Teil 20 des Gehäuses zusammenwirkenden Teil so ausgeführt wie bei dem ersten Teil der Pumpe aus den Figuren 1 und 2. Damit ist es möglich drei Pumpen gemäß den Figuren 1 und 2 ohne das erste Teil 10 des Gehäuses oder Pumpen, bei denen das zweite Teil 20 und das Laufrad 90, wie in der Pumpe aus den Figuren 1 und 2 ausgebildet ist, an dem Verteilbauteil V zu befestigen, um dadurch vollständige Pumpen zu bilden. Eine derartige Pumpe ist in der Figur 6 dargestellt.

### Bezugszeichenliste

- 10: erster Teil des Gehäuses der Pumpe
- 101: Flansch
- 102: Steg
- 103: Ansaugstutzen
- 104: Auslassstutzen
- 105: Ausnehmungen
- 106: Ringnut
- 107: äußere Wand
- 108: innere Wand

- 20: zweiter Teil des Gehäuses der Pumpe
- 201: erste Flansch
- 203: Ringnut
- 204: zweite Wand
- 205: Vorsprünge
- 206: Buchse
- 207: Nuten
- 208: Durchgangslöcher
- 209: Durchgangslöcher

- 30: dritter Teil des Gehäuses der Pumpe
- 301: Schürze, erste Wand
- 303: Stirnwand
- 304: Durchgangslöcher

- 40: vierter Teil des Gehäuses der Pumpe

- 50: Stator
- 60: Rotor
- 601: Rotorwelle
- 603: erste Durchgangslöcher
- 604: zweite Durchgangslöcher

- 70: Schaltungsträger

- 80: Schaltung

- 90: Laufrad
- 901: Buchse
- 902: Durchgangslöcher
- 903: Kranz

- E: Elektronikkammer
- P: Pumpenkammer
- S: Spiralraum
- V: Verteilerbauteil

## Patentansprüche

1. Anordnung für wenigstens einen Kühlkreislauf eines Kraftfahrzeugs, wobei die Anordnung eine Pumpe aufweist, wobei die Pumpe
- ein Gehäuse (10, 20, 30, 40),
- einen Motor mit einem Stator (50) und einem Rotor (60), die in dem Gehäuse (10, 20, 30, 40) der Pumpe angeordnet sind, und
- eine in dem Gehäuse (10, 20, 30, 40) vorgesehene Pumpenkammer (P) aufweist, in welcher ein Laufrad (90) der Pumpe drehbar und von dem Motor antreibbar angeordnet ist, welches das von der Pumpe zu fördernde Medium fördert,
**dadurch gekennzeichnet,**
**dass** die Anordnung einen Tank und/oder ein Verteilerbauteil (V) aufweist, und
**dass** zumindest ein erster Teil (10) des Gehäuses (10, 20, 30, 40) in einem Teil des Tanks oder des Verteilerbauteils (V) der Anordnung ausgebildet ist.

2. Anordnung nach Anspruch 1, **dadurch gekennzeichnet, dass** der erste Teil (10) des Gehäuses (10, 20, 30, 40) einen Teil einer Begrenzung der Pumpenkammer (P) bildet.

3. Anordnung nach Anspruch 1 oder 2, **dadurch gekennzeichnet, dass** der erste Teil (1) des Gehäuses (10, 20, 30, 40) eine Wand bildet, die die Pumpenkammer (P) in radialer Richtung begrenzt.

4. Anordnung nach einem der Ansprüche 1 bis 3, **dadurch gekennzeichnet, dass** in dem ersten Teil (10) des Gehäuses (10, 20, 30, 40) eine Ringnut (106) vorgesehen ist, in welcher ein Kranz (903) des Laufrades (90) der Pumpe eingreift, wodurch das Laufrad (90) in dem Gehäuse (10, 20, 30, 40) gelagert ist.

5. Anordnung nach einem der Ansprüche 1 bis 4, **dadurch gekennzeichnet, dass** in dem ersten Teil (10) des Gehäuses (10, 20, 30, 40) Ausnehmungen (105) vorgesehen sind, die in Richtung zu einem weiteren Teil des Pumpengehäuses geöffnet sind, und dass an dem weiteren Teil des Pumpengehäuses Vorsprünge (205) vorgesehen sind, die in die Ausnehmungen (105) eingreifen.

6. Anordnung nach einem der Ansprüche 1 bis 5, **dadurch gekennzeichnet, dass** in dem ersten Teil (10) des Gehäuses (10, 20, 30, 40) ein Ansaugstutzen (103) und/oder ein Auslassstutzen (104) vorgesehen ist.
